# FASCICULE DE BREVET EUROPEEN

(11) **EP 0 611 204 B1**
(45) Date de publication et mention de la délivrance du brevet: **26.11.1997**
(21) Numéro de dépôt: 94400268.2
(22) Date de dépôt: 08.02.1994
(51) Int. Cl.: A01C 5/06

(54) **Montage des outils d'un semoir**
Anordnung für die Scharen einer Sämaschine
Mounting for the tools of a seeddrill

(30) Priorité: 11.02.1993 FR 9301526
(43) Date de publication de la demande: 17.08.1994
(73) Titulaire: SULKY-BUREL S.A., F-35220 Chateaubourg (FR)
(72) Inventeur: Burel, Jacques, F-35220 Chateaubourg (FR); Neollier, Jean-Christophe, F-35500 Poce Les Bois (FR)
(74) Mandataire: Bernasconi, Jean

(56) Documents cités:
- FR-A- 915 478
- US-A- 3 177 830
- US-A- 4 404 918

## Description

L'invention est relative aux semoirs
qui comprennent : un châssis pesant destiné à être attelé à un tracteur ; un réservoir à semences monté sur le châssis ; une rangée transversale de bras porteurs qui sont articulés indépendamment l'un de l'autre par leurs parties avant respectives sur le châssis par des arbres alignés et sur les parties arrière desquels le châssis s'appuie par des ressorts ; une rangée transversale d'outils ouvreurs munis chacun d'un coutre-semeur ; et une rangée transversale de rouleaux suiveurs montés individuellement fous en rotation sur les bras porteurs ;
et dans lesquels les outils ouvreurs d'une part et les rouleaux suiveurs d'autre part sont disposés par paires réparties chacune de part et d'autre du bras porteur intéressé ; la rangée d'outils ouvreurs est située à l'avant de la rangée de rouleaux suiveurs ; et chaque coutre-semeur est relié au réservoir à semences par un tube d'alimentation en semences.

Dans ce contexte, les termes tels que "avant", "arrière" et "transversal" sont bien entendu définis en relation avec la direction d'avancement du semoir en fonctionnement normal.

On sait que ces semoirs fonctionnent de la manière suivante. Lors de leur avancement, les outils ouvreurs tracent des sillons dans le sol labouré ou non, les coutres-semeurs déposent les semences dans ces sillons et les y enfoncent à la profondeur voulue et les rouleaux suiveurs referment ensuite les sillons. De façon connue, les outils ouvreurs peuvent être constitués chacun par un disque monté fou en rotation sur son axe et accompagné d'un coutre-semeur latéral ou par une dent semeuse non rotative.

De tels semoirs ont été décrits notamment dans les documents FR-A-2 408 288 et 2 445 685. Dans ce cas, les rouleaux suiveurs de chaque paire sont disposés sur un même axe, en général de part et d'autre du bras porteur intéressé. Ces semoirs connus donnent toute satisfaction, notamment en réduisant les coûts de main-d'oeuvre. Néanmoins, on a constaté que ces semoirs connus présentaient l'inconvénient suivant. En terrain irrégulier, les oscillations des bras porteurs, dues à l'appui des rouleaux suiveurs sur le sol, se transmettent intégralement aux outils ouvreurs (sous réserve des bras de levier différents, par rapport à l'axe d'oscillation des bras porteurs), ce qui perturbe la profondeur d'enfoncement des semences. De plus, les arbres des rouleaux suiveurs subissent des chocs qui fatiguent le semoir et ses divers éléments, en particulier lorsque l'un des deux rouleaux suiveurs montés sur un même bras porteur se trouve sur une dépression du sol et l'autre sur une butte où il tend à se "planter".

Par ailleurs, en terrain humide et glaiseux, on a constaté que les paires de rouleaux suiveurs, en particulier lorsqu'ils sont constitués chacun par une jante reliée à un moyeu par des rayons écartés les uns des autres, arrivaient rapidement à être solidarisés ensemble par bourrage et formation d'abord de blocs de terre humide et ensuite de cylindres transversaux entre rouleaux suiveurs se faisant face sur des bras porteurs voisins, ce gui faisait perdre aux rouleaux suiveurs et par conséquent aux bras porteurs et aux outils ouvreurs l'indépendance verticale qui est la condition impérative d'un bon fonctionnement. Des tentatives pour interdire la formation des susdits cylindres transversaux à l'aide de racloirs placés entre les rouleaux suiveurs se sont révélées vaines.

L'invention a pour but d'éliminer ces inconvénients.

A cet effet, le semoir conforme à l'invention est essentiellement caractérisé en ce que les rouleaux suiveurs de chaque paire sont portés respectivement par les arbres extrêmes d'une double manivelle dont l'arbre central tourillonne par rapport à celui des bras porteurs qui est associé à cette paire. Par "double manivelle", on entend ici un levier doublement coudé à angle droit, analogue à la partie du pédalier d'une bicyclette qui est agencée pour porter les pédales et le plateau denté. De préférence, les doubles manivelles ont la même orientation, d'un côté à l'autre du châssis, les arbres extrêmes avant des doubles manivelles étant tous situés sur le même côté de leurs bras porteurs respectifs tandis que les arbres extrêmes arrière sont tous situés sur le côté opposé.

Grâce à l'oscillation de chaque double manivelle qui se produit en fonctionnement autour de l'arbre central de cette dernière, les deux rouleaux suiveurs montés sur un même bras porteur ainsi que ceux qui se font face entre bras porteurs voisins se débattent verticalement l'un par rapport à l'autre, ce qui élimine effectivement les inconvénients rappelés ci-dessus.

Dans le document FR-A-2.462.086, il est décrit un semoir possédant deux rangées successives de bras porteurs sur chacun desquels est monté un soc à un seul disque ouvreur, au moyen d'un support qui porte également un rouleau suiveur sur le même côté que le disque. C'est pour respecter la distance usuelle entre sillons qu'il est nécessaire de prévoir deux rangées successives de bras porteurs à disques unilatéraux, ce qui complique la construction, augmente considérablement sa longueur et rend sa conduite plus délicate. En outre, il est difficile de régler le semoir de façon que les socs travaillent de la même façon d'une rangée de bras porteurs à l'autre, compte tenu de la différence de distance entre ces socs et l'axe d'oscillation des bras porteurs, d'une rangée à l'autre, et de la différence de consistance du terrain avant et après le passage des socs portés par la première rangée de bras porteurs.

L'invention va être maintenant décrite en regard des dessins annexés dont
- la figure 1 représente en perspective les éléments essentiels d'un semoir connu que l'invention vise à perfectionner ;
- la figure 2 représente en plan la double manivelle qui constitue l'élément principal de l'invention ; et
- la figure 3 représente en élévation la double manivelle de la figure 2 et sa liaison avec son bras porteur.

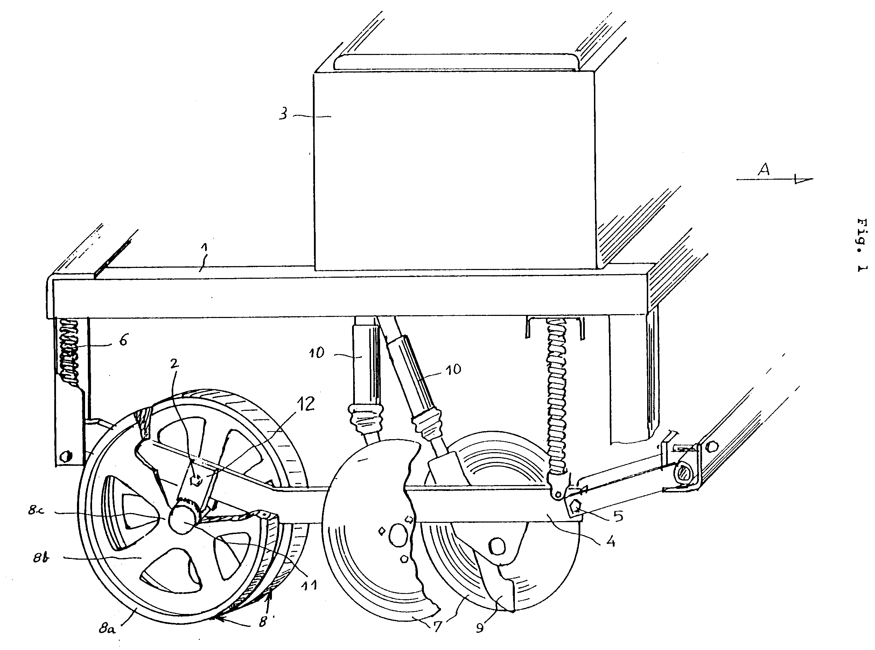

Comme le montre la figure 1, un semoir connu, du type auquel se rapporte l'invention, comprend un châssis pesant 1 destiné à être attelé à un tracteur (non montré) par l'intermédiaire d'une barre d'attelage (non représentée) ; un réservoir à semences 3 monté sur le châssis 1 ; une rangée transversale de bras porteurs 4 qui sont articulés indépendamment l'un de l'autre par leurs parties avant respectives sur le châssis 1, par des arbres transversaux alignés 5 et sur les parties arrière desquels le châssis 1 s'appuie par des ressorts 6 ; une rangée transversale de disques ouvreurs 7 et une rangée transversale de rouleaux suiveurs 8, les disques 7 et rouleaux 8 étant tous montés individuellement fous en rotation sur les bras porteurs 4 mais empêchés de se déplacer latéralement ; et des coutres-semeurs 9 montés respectivement sur les bras porteurs 4, sur le côté de chaque disque ouvreur 7. Selon une variante, les disques ouvreurs 7 peuvent être remplacés par des outils ouvreurs d'un autre type connu, par exemple par des dents non rotatives capables de délivrer les semences et incorporant par conséquent les coutres-semeurs 9. De toute façon, chaque outil ouvreur 7 est accompagné d'un rouleau suiveur 8, sensiblement dans le même alignement longitudinal.

Les disques ouvreurs 7 d'une part et les rouleaux suiveurs 8 d'autre part sont disposés par paires réparties chacune de part et d'autre du bras porteur 4 intéressé. Pour simplifier le dessin, on n'a représenté, à la figure 1, qu'un seul des bras porteurs 4 et les éléments tels que 7, 8, 9, 12 associés à celui-ci. Le sens d'avancement du semoir est schématisé par une fléche A.

Comme on le voit, la rangée de disques (ou autres outils) ouvreurs 7 est située à l'avant (c'est-à-dire à la droite, selon la figure 1) de la rangée de rouleaux suiveurs 8. Enfin, chaque coutre-semoir 9 est relié au réservoir 3 par un tube d'alimentation en semences 10, agencé de façon à se prêter aux débattements des bras porteurs 4 et par conséquent des coutres-semoirs 9.

Dans le semoir connu (figure 1), les rouleaux suiveurs 8 d'une paire associée à un même bras porteur 4 sont montés sur des arbres alignés 11, par l'intermédiaire d'une chape 12 fixée à ce bras porteur 4 par des moyens de fixation schématisés par un boulon 2 traversant ce bras.

Ainsi qu'il a été exposé ci-dessus, on a constaté qu'en terrain humide et glaiseux, les rouleaux suiveurs 8 tendaient à être solidarisés par des blocs de terre humide, en particulier lorsqu'ils sont constitués chacun par une jante 8a reliée par des rayons 8b à un moyeu 8c.

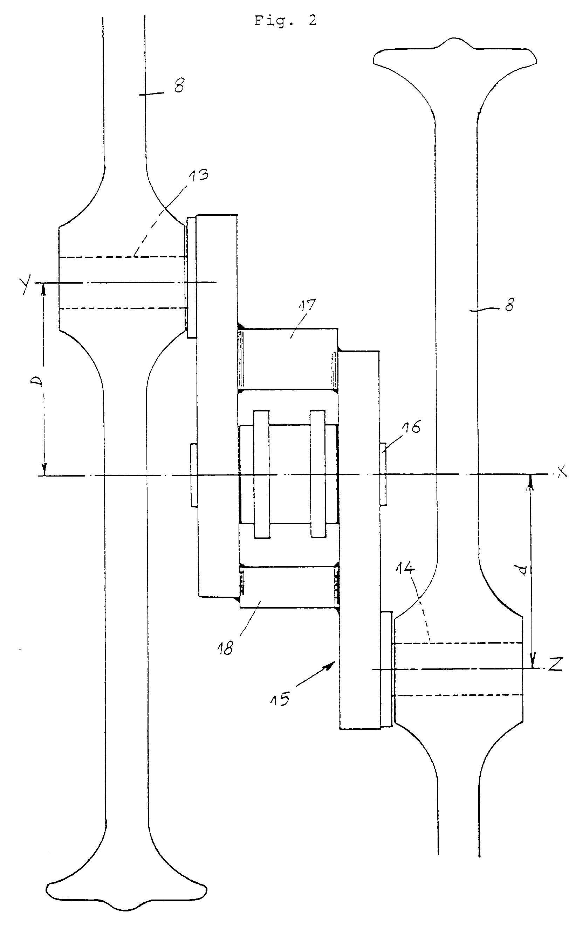

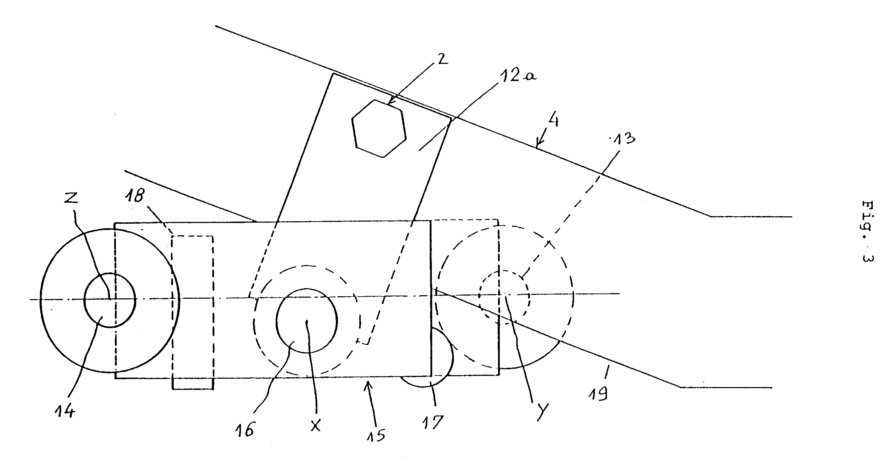

Pour éliminer cet inconvénient, conformément à l'invention, les rouleaux suiveurs 8 de chaque paire associée à un même bras porteur 4 sont portés, non pas par des arbres 11 alignés ainsi qu'il est connu, mais respectivement par les arbres extrêmes 13, 14 d'une double manivelle 15 dont l'arbre central 16 tourillonne dans le bras porteur 4 en question, ainsi qu'il ressort des figures 2 et 3. Contrairement à la construction connue, la rangée d'outils ou disques ouvreurs 7 n'a donc pas une disposition transversale en ligne droite mais en quinconce. Dans ce contexte, lorsqu'il est dit que "l'arbre central 16 tourillonne dans le bras porteur 4", ceci ne signifie pas que cet arbre 16 est monté directement dans le bras porteur 4, mais simplement que son axe de rotation est lié à ce bras porteur 4, par exemple à l'aide d'une chape comme décrit ci-après.

De préférence, les doubles manivelles 15 ont la même orientation, d'un côté à l'autre du châssis 1. En d'autres termes, les arbres extrêmes avant 13 des doubles manivelles 15 sont tous situés sur le même côté (par exemple le côté gauche, comme représenté) de leurs bras porteurs respectifs 4 tandis que les arbres extrêmes arrière 14 des doubles manivelles 15 sont tous situés sur le côté opposé (le côté droit, dans cet exemple) des bras porteurs 4.

De préférence encore, chaque double manivelle 15 est conformée de manière que l'axe géométrique X de son arbre central 16 soit situé au-dessous du plan P passant par les axes géométriques Y, Z de ses arbres extrêmes 13 et 14 (voir la figure 3).

Selon une variante, la distance D entre l'axe Y de l'arbre extrême avant 13 de chaque double manivelle 15 et l'axe X de son arbre central 16 est plus grande que la distance d entre l'axe Z de l'arbre extrême arrière 14 de cette double manivelle 15 et l'axe X en question.

Enfin, il est avantageux d'associer à chaque double manivelle 15 des butées 17 et 18 destinées à limiter son oscillation autour de l'axe X de son arbre central 16. Ces butées 17 et 18 peuvent par exemple être placées à l'avant et à l'arrière de chaque double manivelle et coopérer avec la face inférieure 19 du bras porteur 4 associé à cette double manivelle 15.

Si l'on veut adapter l'invention au semoir connu, il suffit de placer l'arbre central 16 de la double manivelle 15 dans une chape 12a analogue à la chape 12 du semoir connu et adaptée au bras porteur 4 à l'aide des mêmes moyens de fixation 2 ou de moyens de fixation analogues, ce qui permet de limiter les frais d'adaptation.

On obtient ainsi un semoir dont les deux rouleaux suiveurs 8 de chaque paire restent toujours en appui sur le sol, malgré les irrégularités du terrain, et gardent donc leur motricité, la terre collée sur ces rouleaux 8 s'évacuant par cisaillement. Ceci permet de maintenir une profondeur d'enterrage des semences qui est améliorée car les oscillations des disques 7 en hauteur sont divisées par deux (les bras porteurs 4 étant moins sollicités). Sur les sols très irréguliers et notamment sur les sols travaillés en travers de la direction habituelle de labour, le conducteur du tracteur se trouve secoué ainsi qu'il est habituel en pareil cas mais peut constater que le semoir reste stable.

De plus, les rouleaux suiveurs 8 suivent d'une manière relativement indépendante les reliefs du terrain. On constate que ceci élimine effectivement les inconvénients rappelés ci-dessus qui sont dus au bourrage de terre humide.

Enfin, l'invention diminue les chocs sur les arbres des rouleaux suiveurs 8 et par conséquent la fatigue des arbres et de l'ensemble du semoir.

Certes, les rouleaux suiveurs 8 portés par les arbres extrêmes avant 13, étant poussés à la manière des roues d'une brouette, tendent à s'enfoncer plus profondément dans le sol que ceux portés par les bras extrêmes arrière 14, qui sont tirés. Mais cette tendance à l'enfoncement des rouleaux suiveurs avant est combattue efficacement par la différence entre les distances D et d définies ci-dessus ou par l'abaissement de l'axe X par rapport au plan P passant par les axes Y et Z.

Lorsque le semoir est soulevé d'une manière connue en bout de champ, les butées 17, 18 maintiennent les doubles manivelles 15 en une position convenable pour la reprise de contact avec le sol, après retournement du semoir, malgré les déséquilibres éventuels de part et d'autre de l'axe X. De plus, en fonctionnement, ces butées s'opposent à des débattements exagérés des doubles manivelles 15, en cas de dénivellations du terrain anormalement élevées.

## Revendications

1. Semoir
qui comprend : un châssis (1) pesant destiné à être attelé à un tracteur ; un réservoir à semences (3) monté sur le châssis (1) ; une rangée transversale de bras porteurs (4) qui sont articulés indépendamment l'un de l'autre par leurs parties avant respectives sur le châssis (1) par des arbres alignés (5) et sur les parties arrière desquels le châssis (1) s'appuie par des ressorts (6) ; une rangée transversale d'outils ouvreurs (7) munis chacun d'un coutre-semeur (9) ; et une rangée transversale de rouleaux suiveurs (8) montés individuellement fous en rotation sur les bras porteurs (4) ;
et dans lequel les outils ouvreurs (7) d'une part et les rouleaux suiveurs (8) d'autre part sont disposés par paires réparties chacune de part et d'autre du bras porteur (4) intéressé ; la rangée d'outils ouvreurs (7) est située à l'avant de la rangée de rouleaux suiveurs (8) ; et chaque coutre-semeur (9) est relié au réservoir à semences (3) par un tube d'alimentation en semences (10),
caractérisé en ce que les rouleaux suiveurs (8) de chaque paire sont portés respectivement par les arbres extrêmes (13, 14) d'une double manivelle (15) dont l'arbre central (16) tourillonne par rapport à celui des bras porteurs (4) qui est associé à cette paire.

2. Semoir selon la revendication 1, caractérisé en ce que les outils ouvreurs (7) sont constitués par des disques associés à un coutre-semeur (9) et montés individuellement fous en rotation sur les bras porteurs (4).

3. Semoir selon l'une des revendications 1 et 2, caractérisé en ce que les arbres extrêmes avant (13) des doubles manivelles (15) sont tous situés sur le même côté de leurs bras porteurs respectifs (4), les arbres extrêmes arrière (14) étant tous situés sur le côté opposé.

4. Semoir selon l'une quelconque des revendications 1 à 3, caractérisé en ce que la distance (D) entre l'axe (Y) de l'arbre extrême avant (13) de chaque double manivelle (15) et l'axe (X) de son arbre central (16) est plus grande que la distance (d) entre ce dernier axe (X) et l'axe (Z) de l'arbre extrême arrière (14) de cette double manivelle (15).

5. Semoir selon l'une quelconque des revendications 1 à 3, caractérisé en ce que chaque double manivelle (15) est conformée de manière que l'axe géométrique (X) de son arbre central (16) soit situé au-dessous du plan (P) passant par les axes géométriques (Y, Z) de ses arbres extrêmes (13) et (14).

6. Semoir selon l'une quelconque des revendications 1 à 5, caractérisé en ce qu'il comporte des butées (17, 18) destinées à limiter l'oscillation de chaque double manivelle (15) autour de l'axe (X) de son arbre central (16).

7. Semoir selon l'une quelconque des revendications 1 à 6, caractérisé en ce que l'arbre central (16) de la double manivelle (15) tourillonne dans une chape (12a) adaptée au bras porteur (4) par des moyens de fixation (2).

## Claims

1. Seeder which comprises: a heavy chassis (1) adapted to be coupled to a tractor; a seed reservoir (3) mounted on the chassis (1); a transverse row of carrying arms (4) which are articulated independently of one another by their respective front parts on the chassis (1) by means of aligned shafts (5) and on the rear parts of which the chassis (1) is supported by springs (6); a transverse row of working tools (7) each provided with a counter-sower (9); and a transverse row of follower rollers (8) individually eccentrically mounted for rotation on the carrying arms (4);
and wherein the working tools (7) on the one hand and the follower rollers (8) on the other hand are arranged in pairs each of which is located on either side of the carrying arm (4) in question; the row of working tools (7) is located in front of the row of follower rollers (8); and each counter-sower (9) is linked to the seed reservoir (3) by a seed supply tube (10),
characterised in that the follower rollers (8) of each pair are carried respectively by the end shafts (13, 14) of a double crank (15) the central shaft (16) of which pivots relative to the one of the carrying arms (4) which is associated with this pair.

2. Seeder according to claim 1, characterised in that the working tools (7) consist of discs associated with a counter-sower (9) and individually eccentrically mounted for rotation on the carrying arms (4).

3. Seeder according to one of claims 1 and 2, characterised in that the front end shafts (13) of the double cranks (15) are all located on the same side of their respective carrying arms (4), the rear end shafts (14) all being located on the opposite side.

4. Seeder according to any one of claims 1 to 3, characterised in that the distance (D) between the axis (Y) of the front end shaft (13) of each double crank (15) and the axis (X) of its central shaft (16) is greater than the distance (d) between this latter axis (X) and the axis (Z) of the rear end shaft (14) of this double crank (15).

5. Seeder according to any one of claims 1 to 3, characterised in that each double crank (15) is shaped so that the geometric axis (X) of its central shaft (16) is located below the plane (P) passing through the geometric axes (Y, Z) of its end shafts (13) and (14).

6. Seeder according to anny one of claims 1 to 5, characterised in that it comprises abutments (17, 18) intended to limit the oscillation of each double crank (15) about the axis (X) of its central shaft (16).

7. Seeder according to any one of claims 1 to 6, characterised in that the central shaft (16) of the double crank (15) pivots in a bearing (12a) attached to the carrying arm (4) by fixing means (2).

## Patentansprüche

1. Sämaschine,
bestehend aus: einem schweren Rahmen (1), der dazu bestimmt ist, an eine Zugmaschine angehängt zu werden; einem Samenbehälter (3), der auf dem Rahmen (1) montiert ist; einer querliegenden Reihe von Tragearmen (4), die voneinander unabhängig mit ihren jeweiligen Vorderteilen an dem Rahmen (1) durch ausgerichtete Wellen (5) gelenkig montiert sind und an deren Hinterteilen der Rahmen (1) durch Federn (6) aufliegt; einer querliegenden Reihe von Bearbeitungswerkzeugen (7), die jeweils mit einer Drillschar (9) versehen sind; und einer querliegenden Reihe von Nachführrollen (8), die individuell drehbar auf den Tragearmen (4) montiert sind;
und bei der die Bearbeitungswerkzeuge (7) einerseits und die Nachführrollen (8) andererseits paarweise auf beiden Seiten des betreffenden Tragearmes (4) verteilt angeordnet sind; die Reihe von Bearbeitungswerkzeugen (7) vor der Reihe von Nachführrollen (8) angeordnet ist; und jede Drillschar (9) mit dem Samenbehälter (3) durch ein Samenzuführungsrohr (10) verbunden ist,
dadurch gekennzeichnet, daß die Nachführrollest (8) jedes Paares jeweils von den äußeren Wellen (13, 14) einer Doppelkurbel (15) getragen werden, deren Mittelwelle (16) sich in bezug zu jener der Tragearme (4), die mit diesem Paar verbunden ist, dreht.

2. Sämaschine nach Anspruch 1, dadurch gekennzeichnet, daß die Bearbeitungswerkzeuge (7) von Scheiben gebildet werden, die mit einer Drillschar (9) verbunden und individuell drehbar auf den Tragearmen (4) montiert sind.

3. Sämaschine nach einem der Ansprüche 1 und 2, dadurch gekennzeichnet, daß die äußeren vorderen Wellen (13) der Doppelkurbeln (15) alle auf derselben Seite ihrer jeweiligen Tragearme (4) angeordnet sind, wobei die äußeren hinteren Wellen (14) alle auf der gegenüberliegenden Seite angeordnet sind.

4. Sämaschine nach einem der Ansprüche 1 bis 3, dadurch gekennzeichnet, daß der Abstand (D) zwischen der Achse (Y) der äußeren vorderen Welle (13) jeder Doppelkurbel (15) und der Achse (X) ihrer Mittelwelle (16) größer als der Abstand (d) zwischen dieser letztgenannten Achse (X) und der Achse (Z) der äußeren hinteren Welle (14) dieser Doppelkurbel (15) ist.

5. Sämaschine nach einem der Ansprüche 1 bis 3, dadurch gekennzeichnet, daß jede Doppelkurbel (15) derart ausgeführt ist, daß die geometrische Achse (X) ihrer Mittelwelle (16) unter der Ebene (P) liegt, die durch die geometrischen Achsen (Y, Z) ihrer äußeren Wellen (13) und (14) geht.

6. Sämaschine nach einem der Ansprüche 1 bis 5, dadurch gekennzeichnet, daß sie Anschläge (17, 18) umfaßt, die dazu bestimmt sind, das Schwingen jeder Doppelkurbel (15) um die Achse (X) ihrer Mittelwelle (16) zu begrenzen.

7. Sämaschine nach einem der Ansprüche 1 bis 6, dadurch gekennzeichnet, daß sich die Mittelwelle (16) der Doppelkurbel (15) in einem Gabelkopf (12a) dreht, der durch Befestigungsmittel (2) mit dem Tragearm (4) verbunden ist.
